# EUROPÄISCHE PATENTSCHRIFT

(11) **EP 1 784 281 B1**
(45) Veröffentlichungstag und Bekanntmachung des Hinweises auf die Patenterteilung: **19.03.2008**
(21) Anmeldenummer: 05758414.6
(22) Anmeldetag: 05.07.2005
(51) Int. Cl.: B23Q 17/22, B23Q 16/00, G01B 7/02, G01D 5/241, B23K 7/10

(54) **VERFAHREN ZUR EINSTELLUNG EINES VORGEGEBENEN ABSTANDS ZWISCHEN EINEM BEARBEITUNGSWERKZEUG UND EINEM ELEKTRISCH LEITFÄHIGEN WERKSTÜCK**
METHOD FOR SETTING A PREDETERMINED DISTANCE BETWEEN A MACHINE TOOL AND AN ELECTRICALLY CONDUCTIVE WORKPIECE
PROCEDE POUR AJUSTER UN ECART PREDEFINI ENTRE UN OUTIL D'USINAGE ET UNE PIECE METALLIQUE OU NON METALLIQUE ELECTROCONDUCTRICE

(30) Priorität: 30.08.2004 DE 102004042135
(43) Veröffentlichungstag der Anmeldung: 16.05.2007
(73) Patentinhaber: IHT Automation GmbH & Co. KG, 76532 Baden-Baden (DE)
(72) Erfinder: SCHMALL, Karl, Heinz, 76532 Baden-Baden (DE); HECK, Robert, 76532 Baden-Baden (DE)
(74) Vertreter: Reule, Hanspeter
(86) Internationale Anmeldenummer: PCT/EP2005/007206
(87) Internationale Veröffentlichungsnummer: WO 2006/024338

(56) Entgegenhaltungen:
- DE-A1- 4 217 292
- DE-A1- 10 202 867
- DE-A1- 19 727 094
- DE-C2- 4 244 834

## Beschreibung

Die Erfindung betrifft ein Verfahren zur Einstellung mindestens eines vorgegebenen Abstands zwischen einem Bearbeitungswerkzeug und einem metallischen oder nichtmetallischen, elektrisch leitfähigen Werkstück gemäß Oberbegriff des Anspruchs 1 bzw. 2. DE-4 217 292-A zeigt ein Verfahren zum Messen des Abstands zwischen einem Werkzeug und einem Werkstück. Die Erfindung betrifft auch eine Vorrichtung zur Durchführung des Verfahrens (siehe, z.B., DE-19 727 094 A).

Bei vielen Bearbeitungswerkzeugen wie beispielsweise Brennschneidwerkzeugen, die zum Bearbeiten eines elektrisch leitfähigen, vorzugsweise metallischen Werkstücks dienen, ist es von großer Bedeutung, dass für den Bearbeitungsvorgang ein vorgegebener Abstand zum Werkstück möglichst präzise eingestellt wird. Wenn beispielsweise der Abstand zwischen einem Plasmaschneidbrenner und dem zu schneidenden Werkstück nicht exakt eingestellt ist, führt dies zu erhöhtem Verschleiß des Plasmaschneidbrenners und zu einer ungenauen Bearbeitung des Werkstücks. Eine exakte Einstellung des Abstands, in dem der Plasmaschneidbrenner gezündet wird bzw. des Abstands, in dem sich der Brenner während des Schneidvorgangs vom Werkstück entfernt befindet, ist vor allem deshalb schwierig, weil die Position des Werkstücks bzw. seine Höhe oft nicht exakt bestimmt werden können. Eine bekannte Methode zur Einstellung des Zündabstands besteht darin, dass der Schneidbrenner so weit auf das Werkstück zubewegt wird, bis er dieses berührt. Anschließend wird er mittels einer mechanischen Wegmesseinrichtung bis zum Zündabstand vom Werkstück abgehoben. Diese Methode hat jedoch den Nachteil, dass sie ungenau ist, wenn das Werkstück ein dünnes Blech ist. Das Blech wird beim Auftreffen des Schneidbrenners deformiert und dieser dringt in die Delle im Blech ein, so dass der Abstand zwischen Schneidbrenner und der Oberfläche des Blechs, von dem aus der Schneidbrenner mittels der Wegmesseinrichtung auf den Zündabstand angehoben wird, nicht Null ist, sondern negativ. Des Weiteren ist die Deformation des Blechs eine oft unerwünschte Beschädigung.

Eine weitere bekannte Methode sieht vor, dass der Brenner zunächst auf das Werkstück zu bewegt wird, dann aber in einem vorgegebenen Abstand oberhalb des Werkstücks angehalten wird. Dieser Abstand wird als Erstfindungsabstand bezeichnet. Vom Erstfindungsabstand wird der Brenner mittels der Wegmesseinrichtung auf den gewünschten Zündabstand gebracht. Die Genauigkeit des eingestellten Zündabstands hängt somit von der Genauigkeit ab, mit der der Erstfindungsabstand eingestellt wird. Zur Einstellung des Erstfindungsabstands weist der Brenner einen um seine Spitze herum angeordneten ringförmigen kapazitiven Sensor auf, der mit einer Auswerteelektronik verbunden ist. Die Auswerteelektronik weist einen elektrischen Schwingkreis auf, dessen Kapazität durch den Sensor sowie das Werkstück gebildet wird. Bei Annäherung des Brenners sowie des an ihm fixierten Sensors an das Werkstück nimmt die Resonanzfrequenz des Schwingkreises ab. Die Abhängigkeit der Resonanzfrequenz vom Abstand zwischen dem Sensor und dem Werkstück kann bei einer Kalibrierungsmessung gemessen werden, so dass die Resonanzfrequenz als Maß für den Abstand zwischen dem Sensor und dem Werkstück dienen kann. Diese Methode hat den Nachteil, dass sich die Kurve der über dem Abstand aufgetragenen Resonanzfrequenz durch Umwelteinflüsse wie Luftfeuchtigkeit oder Umgebungstemperatur deutlich verschieben kann, so dass die Einstellung des Erstfindungsabstands bei veränderlichen äußeren Bedingungen ungenau ist.

Es ist daher Aufgabe der Erfindung, ein Verfahren der eingangs genannten Art derart weiterzubilden, dass eine Einstellung des Erstfindungsabstands mit größerer Genauigkeit möglich ist.

Die Aufgabe wird erfindungsgemäß durch ein Verfahren mit den Merkmalen des Anspruchs 1 bzw. des Anspruchs 2 gelöst. Zur Durchführung des Verfahrens wird eine Vorrichtung mit den Merkmalen des Anspruchs 8 vorgeschlagen. Vorteilhafte Weiterbildungen des Verfahrens sind Gegenstand der abhängigen Ansprüche 3 bis 7, vorteilhafte Weiterbildungen der Vorrichtung sind Gegenstand der Ansprüche 9 bis 11.

Der Erfindung liegt die Erkenntnis zugrunde, dass sich die Resonanzfrequenz des Schwingkreises bei einer Änderung der äußeren Bedingungen um einen für alle Abstände annähernd konstanten Wert verändert. Eine Veränderung der äußeren Bedingungen bewirkt somit im Wesentlichen nur, dass sich die Kurve der über dem Abstand aufgetragenen Resonanzfrequenz nach oben oder nach unten verschiebt. Die Steigung der Kurve bleibt jedoch bei jedem Abstand annähernd konstant. Die Änderung der Resonanzfrequenz in einem vorgegebenen Zeitintervall, die einer Änderung der Resonanzfrequenz bei Annäherung um einen bestimmten Weg entspricht, ist somit ein wesentlich genaueres Maß für den Abstand als der absolute Wert der Resonanzfrequenz. Voraussetzung hierfür ist der nichtlineare Verlauf der Resonanzfrequenzkurve, deren Steigung bei zunehmendem Abstand abnimmt. Voraussetzung für die Anwendbarkeit des erfindungsgemäßen Verfahrens ist, dass das Werkstück elektrisch leitfähig, also zumindest halbleitend ist.

Das erfindungsgemäße Verfahren wird zwar bevorzugt mit einem kapazitiven Sensor durchgeführt, der zusammen mit dem Werkstück die Kapazität eines elektrischen Schwingkreises bildet. Die ausgelesene Kenngröße ist dann die Resonanzfrequenz des Schwingkreises. Es ist jedoch auch möglich, andere Arten von kapazitiven oder induktiven Sensoren zu verwenden. Die Kenngröße kann, abhängig vom verwendeten Sensor und von der verwendeten Auswerteelektronik, die Lade- und Entladezeit einer Kapazität, die Halbwertzeit eines Spulenstroms oder bei von außen aufgeprägter fester Frequenz die Phase zwischen Strom und Wechselspannung oder die Amplitude des Wechselstroms sein. Das einzig zwingende Kriterium ist, dass die Kenngröße einen nicht linearen Verlauf über dem Abstand zwischen dem Sensor und dem Werkstück aufweist.

Zweckmäßig wird jeder ausgelesene Wert der Kenngröße mit dem ein Zeitintervall zuvor ausgelesenen Wert verglichen. Es ist jedoch auch möglich, den ausgelesenen Wert mit einem n Zeitintervalle zuvor ausgelesenen Wert zu vergleichen, wobei n eine natürliche Zahl ist.

Eine Verfeinerung des Verfahrens sieht vor, dass jeder ausgelesene Wert mit mehreren, jeweils vorgegebene Anzahlen von Zeitintervallen zuvor ausgelesenen Vergleichswerten verglichen wird, dass die Differenzen des ausgelesenen Werts und der Vergleichswerte bestimmt werden, dass in der Datenverarbeitungseinheit zu jedem Vergleichswert eine den vorgegebenen Abstand charakterisierende Grenzdifferenz gespeichert ist und dass die Bewegung des Bearbeitungswerkzeugs dann angehalten wird, wenn eine vorgegebene Anzahl von Differenzen des ausgelesenen Werts und der Vergleichswerte die jeweils zugeordnete Grenzdifferenz betragsmäßig erreicht oder überschreitet. So kann beispielsweise der ausgelesene Wert mit den fünf zuvor ausgelesenen Vergleichswerten verglichen werden. Zu jedem der zuvor ausgelesenen Vergleichswerte ist in der Datenverarbeitungseinheit eine Grenzdifferenz gespeichert. Wenn alle Differenzen zwischen dem ausgelesenen Wert und den Vergleichswerten mindestens so groß sind wie die den Vergleichswerten zugeordneten Grenzdifferenzen, gilt der Erstfindungsabstand als erreicht. Eine falsche Bestimmung des Erstfindungsabstands aufgrund einer einzelnen Fehlmessung der Kennzahl wird dadurch ausgeschlossen.

Vorzugsweise werden ein erster und ein zweiter vorgegebener Abstand eingestellt und das Bearbeitungswerkzeug wird nach Erreichen des ersten vorgegebenen Abstands abgebremst und mit verringerter Geschwindigkeit bis zum zweiten vorgegebenen Abstand bewegt. Der zweite vorgegebene Abstand ist dann der Erstfindungsabstand. Dieser vorteilhaften Weiterbildung liegt der Gedanke zugrunde, dass einerseits der Erstfindungsabstand im täglichen Gebrauch schnell eingestellt werden sollte, dass aber andererseits eine zu hohe Geschwindigkeit beim Annähern an das Werkstück zu einer ungenaueren Messung führt. Wenn die Annäherungsgeschwindigkeit variabel gewählt werden kann, ist es überdies erforderlich, daß mittels der Datenverarbeitungseinheit die Geschwindigkeit des Bearbeitungswerkzeugs gemessen wird und dass die Grenzdifferenz geschwindigkeitsabhängig vorgegeben wird.

Vorteilhafterweise geht der Einstellung des Erstfindungsabstands eine Kalibrierung voraus. Bei dieser wird zur Bestimmung der den Erstfindungsabstand charakterisierenden Grenzdifferenz das Bearbeitungswerkzeug bis zur Berührung des Werkstücks auf dieses zu bewegt, und mittels der Datenverarbeitungseinheit wird die Kenngröße abstandsabhängig bestimmt und gespeichert. Die Verlaufskurve der Kenngröße über dem Abstand kann damit für unterschiedliche Werkstücke individuell bestimmt werden.

Die Vorrichtung zur Durchführung des erfindungsgemäßen Verfahrens weist vorteilhafterweise als Sensor einen metallischen Kopf des Bearbeitungswerkzeugs auf. Dieser ist gegen die anderen Bauteile des Bearbeitungswerkzeugs elektrisch isoliert und bildet zusammen mit dem Werkstück die Kapazität eines elektrischen Schwingkreises. Im Gegensatz zu dem aus dem Stand der Technik bekannten ringförmigen kapazitiven Sensor liefert dieser Sensor auch am Rand des Werkstücks zuverlässige Ergebnisse.

Im Folgenden wird die Erfindung anhand eines in der Zeichnung schematisch dargestellten Ausführungsbeispiels näher erläutert. Es zeigen
- Fig. 1: eine schematische Darstellung eines Schneidbrenners zur Ausführung des Verfahrens;
- Fig. 2: eine typische Kurve der Resonanzfrequenz aufgetragen über dem Abstand und
- Fig. 3: die Differenz der Frequenzen zweier aufeinander folgender Messpunkte der Kurve aus Fig. 2 über dem Abstand aufgetragen.

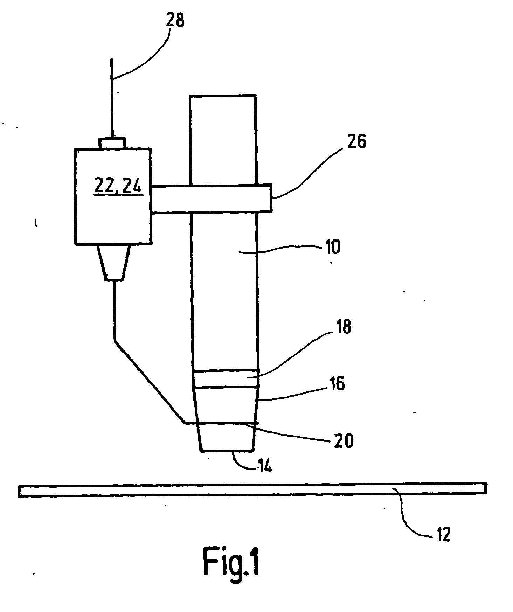

Ein Plasmaschneidbrenner 10 (Fig. 1), der zum Schneiden eines Metallblechs 12 bestimmt ist, weist an seiner dem Metallblech 12 zugewandten Spitze 14 eine Düsenkappe 16 aus Metall auf, aus der beim Schneidvorgang das Plasma austritt. Die Düsenkappe 16 ist gegenüber den übrigen Bauteilen des Plasmaschneidbrenners 10 mittels einer Isolierung 18 elektrisch isoliert. Die Düsenkappe 16 dient als kapazitiver Sensor und bildet zusammen mit dem Metallblech 12 eine Kapazität. Über eine Kontaktfeder 20 ist die Düsenkappe 16 mit einer Sensorelektronik verbunden, die einen elektrischen Schwingkreis 22 und eine Datenverarbeitungseinheit 24 aufweist. Die Sensorelektronik 22, 24 ist über einen Halter 26 am Plasmaschneidbrenner 10 befestigt und über ein Kabel 28 mit einer Steuereinheit für den Plasmabrenner 10 verbunden, die dessen Bewegung in vertikaler Richtung mittels einer Antriebseinrichtung steuert.

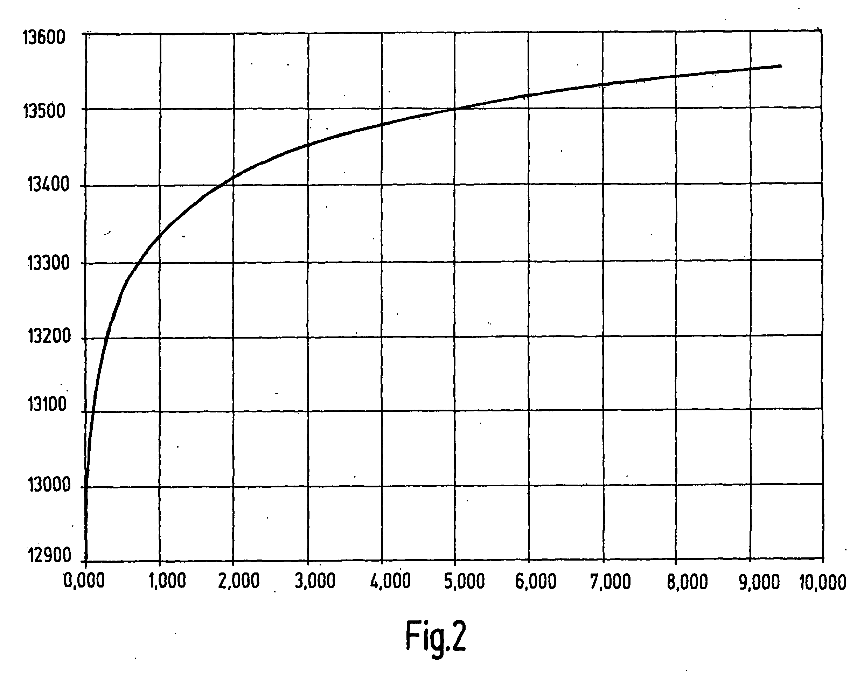

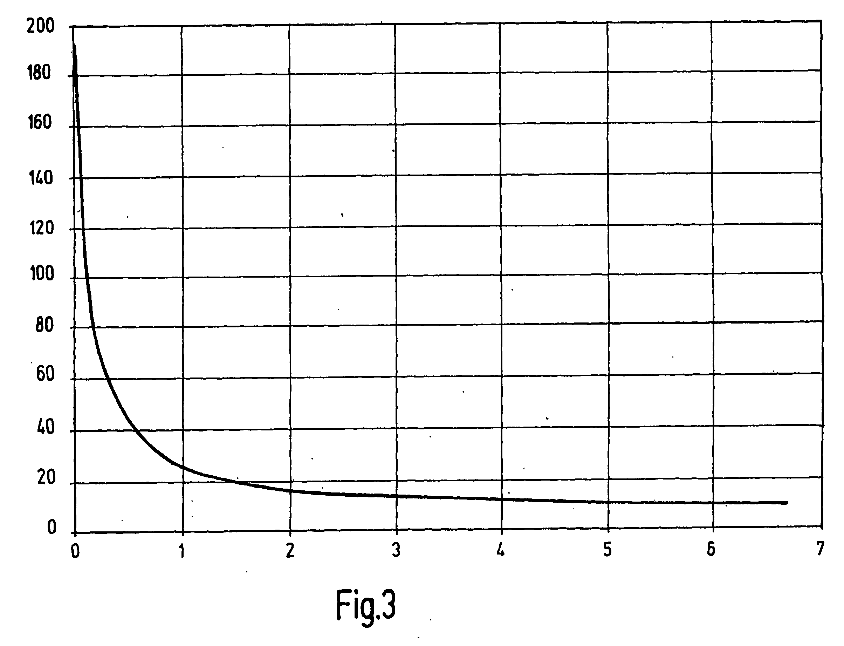

Die Resonanzfrequenz des Schwingkreises 22 ist abhängig vom Abstand zwischen dem Sensor 16 und dem Metallblech 12. Fig. 2 zeigt den Verlauf der Resonanzfrequenz aufgetragen über dem Abstand. Die ermittelten Messpunkte wurden in konstanten Abstandsintervallen aufgenommen, die Frequenz ist in Kilohertz, der Abstand in Millimeter angegeben. Die Kurve zeigt einen nichtlinearen Verlauf und weist eine Steigung auf, die bei zunehmendem Abstand kleiner wird. In Fig. 3 ist für jeden Messpunkt der Kurve aus Fig. 2 die Differenz zwischen der bei dem jeweiligen Messpunkt ermittelten Frequenz und der bei dem benachbarten, bei größerem Abstand gemessenen Messpunkt ermittelten Frequenz betragsmäßig aufgetragen. Je näher die Messpunkte der Fig. 2 beieinander liegen, desto genauer entspricht die Kurve gemäß Fig. 3 der Ableitung der Kurve gemäß Fig. 2.

Bevor der Plasmaschneidbrenner 10 gezündet wird, wird er in definierter Position in einer vorgegebenen Höhe über der Oberfläche des Metallblechs 12 positioniert. Hierzu wird er zuerst mit konstanter Geschwindigkeit auf das Metallblech 12 zu bewegt. In konstanten Zeitintervallen, die typischerweise eine Millisekunde betragen, wird die Resonanzfrequenz des Schwingkreises 22 durch die Datenverarbeitungseinheit 24 ausgelesen. Die Datenverarbeitungseinheit 24 vergleicht jede gemessene Resonanzfrequenz mit der ein Zeitintervall zuvor gemessenen als Vergleichswert und bildet zu jedem Messpunkt die Differenz aus gemessener Resonanzfrequenz und dem Vergleichswert. Wenn der Plasmaschneidbrenner 10 einen bestimmten vorgegebenen Abstand zur Oberfläche des Metallblechs 12 erreicht, so ist dies damit korreliert, dass der Differenzbetrag der Frequenzen einen bestimmten Grenzwert erreicht. Dies wird gemessen, und der Vorschub des Plasmaschneidbrenners 10 wird in diesem sogenannten Erstfindungsabstand zum Metallblech 12 angehalten. Da äußere Einflüsse, wie Luftfeuchtigkeit oder Raumtemperatur, im Wesentlichen lediglich den Verlauf der Frequenzkurve gemäß Fig. 2, nicht aber den Kurvenverlauf ihrer Ableitung gemäß Fig. 3 beeinflussen, ist mit dem dargestellten Verfahren der Erstfindungsabstand sehr genau einstellbar.

Wenn der Erstfindungsabstand präzise eingestellt ist, kann auch der Abstand des Plasmaschneidbrenners 10 vom Metallblech 12, in dem dieser gezündet wird, präzise durch Rückzug um einen bestimmten Weg eingestellt werden. Vor der Anwendung des Verfahrens wird die Messkurve gemäß Fig. 2 mittels einer Kalibrierungsmessung bestimmt, bei der der Plasmaschneidbrenner 10 bis zur Berührung des Metallblechs 12 auf dieses zu bewegt wird, wobei die die in Fig. 2 dargestellte Messkurve ergebenden Messpunkte aufgenommen werden.

Zusammenfassend ist folgendes festzuhalten: Die Erfindung betrifft ein Verfahren zur Einstellung mindestens eines vorgegebenen Abstands zwischen einem Bearbeitungswerkzeug 10 und einem metallischen oder nichtmetallischen, elektrisch leitfähigen Werkstück 12, wobei am Bearbeitungswerkzeug 10 dem Werkstück 12 zugewandt ein kapazitiver und/oder induktiver Sensor 16 fixiert ist, wobei das Bearbeitungswerkzeug 10 mittels einer Antriebseinrichtung mit konstanter Geschwindigkeit auf das Werkstück 12 zu bewegt wird und wobei mittels einer Datenverarbeitungseinheit 24 in vorgegebenen Zeitintervallen ein Sensorsignal ausgelesen wird, das eine Kenngröße aufweist, die sich in Abhängigkeit vom Abstand des Bearbeitungswerkzeugs 10 zum Werkstück 12 nichtlinear stetig ändert. Erfindungsgemäß ist vorgesehen, dass mittels der Datenverarbeitungseinheit 24 jeder ausgelesene Wert der Kenngröße mit einem eine vorgegebene Anzahl von Zeitintervallen zuvor ausgelesenen Vergleichswert verglichen wird und die Differenz der miteinander verglichenen Werte berechnet wird, dass in der Datenverarbeitungseinheit 24 eine den vorgegebenen Abstand charakterisierende Grenzdifferenz gespeichert ist und dass die Bewegung des Bearbeitungswerkzeugs 10 angehalten wird, wenn der Betrag der Differenz der miteinander verglichenen Werte die Grenzdifferenz erreicht oder überschreitet.

## Patentansprüche

1. Verfahren zur Einstellung mindestens eines vorgegebenen Abstands zwischen einem Bearbeitungswerkzeug (10) und einem metallischen Werkstück (12), wobei am Bearbeitungswerkzeug (10) dem Werkstück (12) zugewandt ein kapazitiver und/oder induktiver Sensor (16) fixiert ist, wobei das Bearbeitungswerkzeug (10) mittels einer Antriebseinrichtung mit konstanter Geschwindigkeit auf das Werkstück (12) zu bewegt wird und wobei mittels einer Datenverarbeitungseinheit (24) in vorgegebenen Zeitintervallen ein Sensorsignal ausgelesen wird, das eine Kenngröße aufweist, die sich in Abhängigkeit vom Abstand des Bearbeitungswerkzeugs (10) zum Werkstück (12) nichtlinear stetig ändert, **dadurch gekennzeichnet, dass** mittels der Datenverarbeitungseinheit (24) jeder ausgelesene Wert der Kenngröße mit einem eine vorgegebene Anzahl von Zeitintervallen zuvor ausgelesenen Vergleichswert verglichen wird und die Differenz der miteinander verglichenen Werte berechnet wird, dass in der Datenverarbeitungseinheit (24) eine den vorgegebenen Abstand charakterisierende Grenzdifferenz gespeichert ist und dass die Bewegung des Bearbeitungswerkzeugs (10) angehalten wird, wenn der Betrag der Differenz der miteinander verglichenen Werte die Grenzdifferenz erreicht oder überschreitet.

2. Verfahren zur Einstellung mindestens eines vorgegebenen Abstands zwischen einem Bearbeitungswerkzeug (10) und einem nichtmetallischen, elektrisch leitfähigen Werkstück (12), wobei am Bearbeitungswerkzeug (10) dem Werkstück (12) zugewandt ein kapazitiver und/oder induktiver Sensor (16) fixiert ist, wobei das Bearbeitungswerkzeug (10) mittels einer Antriebseinrichtung mit konstanter Geschwindigkeit auf das Werkstück (12) zu bewegt wird und wobei mittels einer Datenverarbeitungseinheit (24) in vorgegebenen Zeitintervallen ein Sensorsignal ausgelesen wird, das eine Kenngröße aufweist, die sich in Abhängigkeit vom Abstand des Bearbeitungswerkzeugs (10) zum Werkstück (12) nichtlinear stetig ändert, **dadurch gekennzeichnet, dass** mittels der Datenverarbeitungseinheit (24) jeder ausgelesene Wert der Kenngröße mit einem eine vorgegebene Anzahl von Zeitintervallen zuvor ausgelesenen Vergleichswert verglichen wird und die Differenz der miteinander verglichenen Werte berechnet wird, dass in der Datenverarbeitungseinheit (24) eine den vorgegebenen Abstand charakterisierende Grenzdifferenz gespeichert ist und dass die Bewegung des Bearbeitungswerkzeugs (10) angehalten wird, wenn der Betrag der Differenz der miteinander verglichenen Werte die Grenzdifferenz erreicht oder überschreitet.

3. Verfahren nach Anspruch 1 oder 2, **dadurch gekennzeichnet, dass** jeder ausgelesene Wert mit mehreren, jeweils vorgegebene Anzahlen von Zeitintervallen zuvor ausgelesenen Vergleichswerten verglichen wird, dass die Differenzen des ausgelesenen Werts und der Vergleichswerte bestimmt werden, dass in der Datenverarbeitungseinheit (24) zu jedem Vergleichswert eine den vorgegebenen Abstand charakterisierende Grenzdifferenz gespeichert ist und dass die Bewegung des Bearbeitungswerkzeugs (10) dann angehalten wird, wenn eine vorgegebene Anzahl von Differenzen des ausgelesenen Werts und der Vergleichswerte die jeweils zugeordnete Grenzdifferenz betragsmäßig erreicht oder überschreitet.

4. Verfahren nach einem der vorangehenden Ansprüche, **dadurch gekennzeichnet, dass** der Sensor (16) Teil eines elektrischen Schwingkreises (22) ist und dass als Kenngröße die Resonanzfrequenz des Schwingkreises (22) ausgelesen wird.

5. Verfahren nach einem der vorangehenden Ansprüche, **dadurch gekennzeichnet, dass** ein erster und ein zweiter vorgegebener Abstand eingestellt werden und dass das Bearbeitungswerkzeug (10) nach Erreichen des ersten vorgegebenen Abstands abgebremst und mit verringerter Geschwindigkeit bis zum zweiten vorgegebenen Abstand bewegt wird.

6. Verfahren nach einem der vorangehenden Ansprüche, **dadurch gekennzeichnet, dass** mittels der Datenverarbeitungseinheit (24) die Geschwindigkeit des Bearbeitungswerkzeugs (10) gemessen wird und dass die Grenzdifferenz geschwindigkeitsabhängig vorgegeben wird.

7. Verfahren nach einem der vorangehenden Ansprüche, **dadurch gekennzeichnet, dass** der Einstellung des mindestens einen vorgegebenen Abstands eine Kalibrierung vorausgeht, bei der zur Bestimmung der den vorgegebenen Abstand charakterisierenden Grenzdifferenz das Bearbeitungswerkzeug (10) bis zur Berührung des Werkstücks (12) auf dieses zu bewegt wird und mittels der Datenverarbeitungseinheit (24) die Kenngröße abstandsabhängig bestimmt und gespeichert wird.

8. Vorrichtung zur Durchführung des Verfahrens nach einem der vorangehenden Ansprüche, mit einem an einem Bearbeitungswerkzeug (10) fixierten kapazitiven und/oder induktiven Sensor (16), mit einer Datenverarbeitungseinheit (24) zur zeitabhängigen Auswertung einer vom Sensor (16) ermittelten Kenngröße und des vom Bearbeitungswerkzeug (10) in Richtung zu einem Werkstück zurückgelegten Wegs, **dadurch gekennzeichnet, dass** sie eine Antriebseinrichtung zum Bewegen des Bearbeitungswerkzeugs (10) mit konstanter Geschwindigkeit in Richtung zum Werkstück (12) aufweist, wobei mittels der Datenverarbeitungseinheit (24) in vorgegebenen Zeitintervallen ein Sensorsignal ausgelesen wird, das eine Kenngröße aufweist, die sich in Abhängigkeit vom Abstand des Bearbeitungswerkzeugs (10) zum Werkstück (12) nichtlinear stetig ändert, und jeder ausgelesene Wert der Kenngröße mit einem eine vorgegebene Anzahl von Zeitintervallen zuvor ausgelesenen Vergleichswert verglichen wird und die Differenz der miteinander verglichenen Werte berechnet wird, und wobei in der Datenverarbeitungseinheit (24) eine den vorgegebenen Abstand charakterisierende Grenzdifferenz gespeichert ist und die Bewegung des Bearbeitungswerkzeugs (10) angehalten wird, wenn der Betrag der Differenz der miteinander verglichenen Werte die Grenzdifferenz erreicht oder überschreitet.

9. Vorrichtung nach Anspruch 8, **dadurch gekennzeichnet, dass** der Sensor (16) Teil eines elektrischen Schwingkreises (22) ist.

10. Vorrichtung nach Anspruch 9, **dadurch gekennzeichnet, dass** der Sensor (16) zusammen mit dem Werkstück (12) die Kapazität des Schwingkreises (22) bildet.

11. Vorrichtung nach Anspruch 10, **dadurch gekennzeichnet, dass** der Sensor (16) ein metallischer Kopf des Bearbeitungswerkzeugs (10) ist, der gegen die anderen Bauteile des Bearbeitungswerkzeugs (10) elektrisch isoliert ist.

## Claims

1. Method for setting at least one predetermined distance between a machine tool (10) and a metallic workpiece (12), whereby a capacitative and/or inductive sensor (16) is fixed in place on the machine tool (10), facing the workpiece (12), whereby the machine tool (10) is moved towards the workpiece (12) at a constant speed, by means of a drive device, and whereby a sensor signal is read out at predetermined time intervals, by means of a data processing unit (24), which signal has a characteristic variable that continuously changes, in non-linear manner, as a function of the distance of the machine tool (10) from the workpiece (12), **characterized in that** each value of the characteristic variable that is read out by means of the data processing unit (24) is compared with a comparison value read out previously a predetermined number of time intervals, and the difference of the values compared with one another is calculated, that a limit difference that characterizes the predetermined distance is stored in the data processing unit (24), and that the movement of the machine tool (10) is stopped when the amount of the difference of the values compared with one another reaches or exceeds the limit difference.

2. Method for setting at least one predetermined distance between a machine tool (10) and a non-metallic, electrically conductive workpiece (12), whereby a capacitative and/or inductive sensor (16) is fixed in place on the machine tool (10), facing the workpiece (12), whereby the machine tool (10) is moved towards the workpiece (12) at a constant speed, by means of a drive device, and whereby a sensor signal is read out at predetermined time intervals, by means of a data processing unit (24), which signal has a characteristic variable that continuously changes, in non-linear manner, as a function of the distance of the machine tool (10) from the workpiece (12), **characterized in that** each value of the characteristic variable that is read out by means of the data processing unit (24) is compared with a comparison value read out previously a predetermined number of time intervals, and the difference of the values compared with one another is calculated, that a limit difference that characterizes the predetermined distance is stored in the data processing unit (24), and that the movement of the machine tool (10) is stopped when the amount of the difference of the values compared with one another reaches or exceeds the limit difference.

3. Method according to claim 1 or 2, **characterized in that** each value that is read out is compared with several comparison values, read out previously a predetermined number of time intervals, in each instance, and that the differences of the read-out value and the comparison values are determined, that a limit difference that characterizes the predetermined distance is stored in the data processing unit (24) for every comparison value, and that the movement of the machine tool (10) is stopped when a predetermined number of differences of the read-out value and the comparison values reaches or exceeds the limit difference assigned, in each instance, in terms of amount.

4. Method according to one of the preceding claims, **characterized in that** the sensor (16) is part of an electrical oscillating circuit (22) and that the resonance frequency of the oscillating circuit (22) is read out as the characteristic variable.

5. Method according to one of the preceding claims, **characterized in that** a first and a second predetermined distance are set, and that the machine tool (10) is braked after the first predetermined distance is reached, and moved up to the second predetermined distance at a reduced speed.

6. Method according to one of the preceding claims, **characterized in that** the speed of the machine tool (10) is measured by means of the data processing unit (24), and that the limit difference is predetermined as a function of speed.

7. Method according to one of the preceding claims, **characterized in that** setting the at least one predetermined distance is preceded by a calibration, in which the machine tool (10) is moved towards the workpiece (12) until it makes contact with the latter, in order to determine the limit difference that characterizes the predetermined distance, and the characteristic variable is determined as a function of distance, by means of the data processing unit (24), and stored in memory.

8. Device for implementing the method according to one of the preceding claims, having a capacitative and/or inductive sensor (16) fixed in place on a machine tool (10), having a data processing unit (24) for time-dependent evaluation of a characteristic variable determined by the sensor (16), and of the path traveled by the machine tool (10) in the direction towards a workpiece, **characterized by** having a drive device for moving the machine tool (10) in the direction towards the workpiece (12), whereby a sensor signal is read out at predetermined time intervals, by means of the data processing unit (24), which signal has a characteristic variable that continuously changes, in non-linear manner, as a function of the distance of the machine tool (10) from the workpiece (12), and each value of the characteristic variable that is read out is compared with a comparison value read out previously a predetermined number of time intervals, and the difference of the values compared with one another is calculated, and whereby a limit difference that characterizes the predetermined distance is stored in the data processing unit (24), and the movement of the machine tool (10) is stopped when the amount of the difference of the values compared with one another reaches or exceeds the limit difference.

9. Device according to claim 8, **characterized in that** the sensor (16) is part of an electrical oscillating circuit (22).

10. Device according to claim 9, **characterized in that** the sensor (16) forms the capacitor of the oscillating circuit (22), together with the workpiece (12).

11. Device according to claim 10, **characterized in that** the sensor (16) is a metallic head of the machine tool (10), which is electrically insulated from the other components of the machine tool (10).

## Revendications

1. Procédé pour régler au moins une distance prédéfinie entre un outil d'usinage (10) et une pièce métallique (12), un capteur (16) capacitif et/ou inductif tourné vers la pièce (12) étant fixé sur l'outil d'usinage (10), l'outil d'usinage (10) étant déplacé vers la pièce (12) à vitesse constante au moyen d'un dispositif d'entraînement et un signal de capteur étant lu à intervalles de temps prédéfinis au moyen d'une unité de traitement de données (24), lequel signal de capteur présente une grandeur caractéristique qui varie continuellement de manière non linéaire en fonction de la distance de l'outil d'usinage (10) par rapport à la pièce (12), **caractérisé en ce qu'**au moyen de l'unité de traitement de données (24), chaque valeur lue de la grandeur caractéristique est comparée avec une valeur comparative lue un nombre prédéfini d'intervalles de temps auparavant et la différence des valeurs comparées entre elles calculée, qu'une différence limite caractérisant la distance prédéfinie est mémorisée dans l'unité de traitement de données (24) et que le mouvement de l'outil d'usinage (10) est arrêté quand la valeur absolue de la différence des valeurs comparées entre elles atteint ou dépasse la différence limite.

2. Procédé pour régler au moins une distance prédéfinie entre un outil d'usinage (10) et une pièce non métallique électroconductrice (12), un capteur (16) capacitif et/ou inductif tourné vers la pièce (12) étant fixé sur l'outil d'usinage (10), l'outil d'usinage (10) étant déplacé vers la pièce (12) à vitesse constante au moyen d'un dispositif d'entraînement et un signal de capteur étant lu à intervalles de temps prédéfinis au moyen d'une unité de traitement de données (24), lequel signal de capteur présente une grandeur caractéristique qui varie continuellement de manière non linéaire en fonction de la distance de l'outil d'usinage (10) par rapport à la pièce (12), **caractérisé en ce qu'**au moyen de l'unité de traitement de données (24), chaque valeur lue de la grandeur caractéristique est comparée avec une valeur comparative lue un nombre prédéfini d'intervalles de temps auparavant et la différence des valeurs comparées entre elles calculée, qu'une différence limite caractérisant la distance prédéfinie est mémorisée dans l'unité de traitement de données (24) et que le mouvement de l'outil d'usinage (10) est arrêté quand la valeur absolue de la différence des valeurs comparées entre elles atteint ou dépasse la différence limite.

3. Procédé selon la revendication 1 ou 2, **caractérisé en ce que** chaque valeur lue est comparée avec plusieurs valeurs comparatives lues chaque fois des nombres prédéfinis d'intervalles de temps auparavant, que les différences de la valeur lue et des valeurs comparatives sont déterminées, qu'une différence limite caractérisant la distance prédéfinie est mémorisée pour chaque valeur comparative dans l'unité de traitement de données (24) et que le mouvement de l'outil d'usinage (10) est arrêté quand un nombre prédéfini de différences de la valeur lue et des valeurs comparatives atteint ou dépasse en valeur absolue la différence limite respectivement associée.

4. Procédé selon l'une des revendications précédentes, **caractérisé en ce que** le capteur (16) fait partie d'un circuit oscillant électrique (22) et que la fréquence de résonance du circuit oscillant (22) est lue comme grandeur caractéristique.

5. Procédé selon l'une des revendications précédentes, **caractérisé en ce qu'**une première et une deuxième distances sont réglées et que l'outil d'usinage (10) est freiné quand il atteint la première distance prédéfinie et déplacé à vitesse réduite jusqu'à la deuxième distance prédéfinie.

6. Procédé selon l'une des revendications précédentes, **caractérisé en ce que** la vitesse de l'outil d'usinage (10) est mesurée au moyen de l'unité de traitement de données (24) et que la différence limite est prédéfinie en fonction de la vitesse.

7. Procédé selon l'une des revendications précédentes, **caractérisé en ce qu'**un calibrage précède le réglage de ladite au moins une distance prédéfinie, lors duquel, pour déterminer la différence limite qui caractérise la distance prédéfinie, l'outil d'usinage (10) est déplacé vers la pièce (12) jusqu'au contact avec celle-ci et, au moyen de l'unité de traitement de données (24), la grandeur caractéristique est déterminée et mémorisée en fonction de la distance.

8. Dispositif pour réaliser le procédé selon l'une des revendications précédentes, avec un capteur (16) capacitif et/ou inductif fixé sur un outil d'usinage (10), avec une unité de traitement de données (24) pour évaluer en fonction du temps une grandeur caractéristique déterminée par le capteur (16) et la course parcourue par l'outil d'usinage (10) en direction d'une pièce, **caractérisé en ce qu'**il comporte un dispositif d'entraînement pour déplacer l'outil d'usinage (10) à vitesse constante en direction de la pièce (12), un signal de capteur étant lu à intervalles de temps prédéfinis au moyen de l'unité de traitement de données (24), lequel signal de capteur présente une grandeur caractéristique qui varie continuellement de manière non linéaire en fonction de la distance de l'outil d'usinage (10) par rapport à la pièce (12), et chaque valeur lue de la grandeur caractéristique étant comparée avec une valeur comparative lue un nombre prédéfini d'intervalles de temps auparavant et la différence des valeurs comparées entre étant calculée, et une différence limite caractérisant la distance prédéfinie étant mémorisée dans l'unité de traitement de données (24) et le mouvement de l'outil d'usinage (10) étant arrêté quand la valeur absolue de la différence des valeurs comparées entre elles atteint ou dépasse la différence limite.

9. Dispositif selon la revendication 8, **caractérisé en ce que** le capteur (16) fait partie d'un circuit oscillant (22) électrique.

10. Dispositif selon la revendication 9, **caractérisé en ce que** le capteur (16) forme avec la pièce (12) la capacité du circuit oscillant (22).

11. Dispositif selon la revendication 10, **caractérisé en ce que** le capteur (16) est une tête métallique de l'outil d'usinage (10) qui est électriquement isolée par rapport aux autres composants de l'outil d'usinage (10).
